# EUROPÄISCHE PATENTSCHRIFT

(11) **EP 1 831 014 B1**
(45) Veröffentlichungstag und Bekanntmachung des Hinweises auf die Patenterteilung: **24.10.2012**
(21) Anmeldenummer: 05813429.7
(22) Anmeldetag: 22.11.2005
(51) Int. Cl.: B32B 17/10, G01N 3/14

(54) **VERBUNDVERGLASUNGEN MIT HOHER ENERGIEAUFNAHME UND HIERFÜR GEEIGNETE ZWISCHENSCHICHTFOLIEN**
COMPOSITE GLAZING WITH AN INCREASED ENERGY ABSORPTION AND FILM INTERLAYERS THAT ARE SUITABLE FOR SAID GLAZING
VITRAGES FEUILLETES A ABSORPTION ELEVEE D'ENERGIE ET FEUILLES INTERCALAIRES POUR DE TELS VITRAGES

(30) Priorität: 23.11.2004 DE 102004000053
(43) Veröffentlichungstag der Anmeldung: 12.09.2007
(73) Patentinhaber: Kuraray Europe GmbH, 65795 Hattersheim (DE)
(72) Erfinder: KELLER, Uwe, 53177 Bonn (DE); LONDSCHIEN, Martin, 53840 Troisdorf (DE)
(74) Vertreter: Kisters, Michael Marcus
(86) Internationale Anmeldenummer: PCT/EP2005/056136
(87) Internationale Veröffentlichungsnummer: WO 2006/056568

(56) Entgegenhaltungen:
- EP-A- 1 151 855
- EP-A- 1 452 308
- EP-A- 1 591 234
- WO-A-01/43963
- WO-A-99/58334
- WO-A-03/087785
- DE-A1- 19 756 274
- GB-A- 1 221 285
- GB-A- 1 260 213
- US-A- 3 762 988
- US-A- 4 041 208
- US-A- 4 361 625
- US-A- 4 822 684
- US-A- 5 340 654
- KATRIN REINCKE UND WOLFGANG GRELLMANN: "Instrumented Tensile-Impact Testing of Polymers" INTERNET ARTICLE, [Online] 2003, XP002367036 Gefunden im Internet: URL:http://www2.iw.uni-halle.de/ww/pdf/tes t2003a22.pdf> [gefunden am 2006-02-09]

## Beschreibung

Die vorliegende Erfindung betrifft Verbundverglasungen bzw. hierfür geeignete Zwischenschichtfolien mit einer hohen Penetrationsfestigkeit d.h. Energieaufnahme bei plötzlicher mechanischer Belastung und ein Verfahren zur Bestimmung der maximalen Energieaufnahme von Zwischenschichtfolien bei plötzlicher mechanischer Belastung.

### Technisches Gebiet

Das Bruchverhalten von Verbundmaterialien wie Verbundsicherheitsglas (VSG) mit einer Zwischenschicht aus Polyvinylbutyral-Folie (PVB-Folie) hängt bekanntermaßen von der Haftkraft zwischen Folie und Glas ab. Ist die Haftkraft sehr hoch, sorgt dies beim mechanischen Versagen des Verbundglases z.B. durch Einwirkung eines Stoßes für das Kleben bleiben der Glasbruchstücke an der Folie, so dass sich scharfkantige Glassplitter nicht ablösen können. Andererseits kann ein aufprallendes Objekt das Verbundglas relativ leicht durchdringen, da die PVB-Folie so stark am Glas haftet, dass sie sich an der Auftreffstelle nicht vom Glas lösen und kaum elastisch verformen kann und somit auch nur wenig zum Abbremsen des Objektes beiträgt. Liegt die Haftung zum Glas auf einem niedrigeren Niveau, kann sich die PVB-Folie an der Auftreffstelle unter Dehnbeanspruchung vom Glas ablösen und verformen, wodurch das auftreffende Objekt abgebremst wird.

Da andererseits eine zu geringe Haftung das Ablösen von Glasbruchstücken von der PVB-Folie erleichtert und somit das Verletzungsrisiko für Personen erhöht, strebt man in der Praxis einen Kompromiss zwischen hoher und niedriger Haftkraft, also ein mittleres Haftungsniveau an, um Splitterbindung auf möglichst hohem Niveau zu erfüllen.

Es ist üblich, die mechanische Stoßfestigkeit oder genauer die Durchschlagfestigkeit von Verbundsicherheitsglas durch den Aufprall von Stahlkugeln nachzuweisen, die aus einer definierten Höhe auf eine vertikal gehalterte Prüfscheibe fallen gelassen werden und damit eine definierte kinetische Energie besitzen. Wenn die kinetische Energie vom VSG vollständig aufgenommen werden kann, wird die Stahlkugel aufgefangen, anderenfalls durchschlägt die Kugel den Verbund. Die Kugelfallprüfung ist ein zentraler Bestandteil nationaler und internationaler Industrienormen, wobei jeweils das Gewicht der Kugel, die Dimensionen der zu verwendenden Prüfscheiben, die Prüftemperatur, die Fallhöhe und andere experimentelle Details festgeschrieben sind, um so zu einer Klassifizierung von Verbundglasaufbauten gemäß ihrer Stoßfestigkeit zu gelangen. Beispielsweise ist gemäß der Europäischen Regelung ECE-R 43 für die Zulassung von Verbundsicherheitsglas als Windschutzscheibe in Kraftfahrzeugen die Durchschlagfestigkeit bei mindestens 4 m Abwurfhöhe unter Verwendung einer Stahlkugel von 2,26 kg bei einer Temperatur von 23 °C nachzuweisen. Für VSG in Bauanwendungen definiert der Europäische Standard EN 356 z.B. die Schutzklassen P1, P2 und P3, welche die Durchschlagfestigkeit gegen drei in Folge abgeworfenen Stahlkugeln mit einem Gewicht von 4 kg aus unterschiedlichen Fallhöhen fordern.

### Stand der Technik

Als zerstörendes Prüfverfahren ist die Kugelfallmethode jedoch materialintensiv, da zur Ermittlung eines zuverlässigen Wertes mehrere Prüfscheiben verbraucht werden. Außerdem hängt gerade bei größeren Scheibenformaten das Ergebnis stark vom Vorspannungsgrad bzw. von der Orientierung des üblichen Floatglases ab, welches herstellungsbedingt ungleiche Oberflächen aufweist. Eine exakte Messung der Energie und damit Rückschlüsse auf die Energieaufnahme der Folie, bezogen auf eine normierte Bruchlänge, ist mit der Kugelfallmethode nicht möglich.

Obwohl der Zusammenhang zwischen Glashaftung und Penetrationsfestigkeit für VSG mit PVB-Folie empirisch gut belegt ist, lässt sich alleine anhand eines gemessenen Haftungsniveaus nicht zuverlässig auf die Stoßfestigkeit einer Verbundverglasung schließen. Zwar gibt es Versuche, durch Verknüpfung einer Haftungsmessung mit einer an der Zwischenschicht zu ermittelnden mechanischen Eigenschaft zu einem verbesserten Modell zu gelangen (WO 03/087785 A2), jedoch ist dessen prediktiver Wert dadurch begrenzt, dass die für ein stoßereignis relevante Folienfestigkeit unter dynamischen Bedingungen unberücksichtigt bleibt.

### Aufgabe der Erfindung

Die Energieaufnahmefähigkeit von Verbundverglasungen beim Auftreffen eines Objekts ist von folgenden Faktoren bestimmt: Das Objekt zerstört beim Aufprall die durch die Zwischenschicht miteinander verklebten Glasscheiben und bildet je nach Geometrie des Objektes eine Vertiefung bzw. einen Krater, womit eine lokale Auslenkung der Folie aus der ursprüngliche Ebene erzwungen wird, welche zwangsläufig mit einer Dehnung der Folie verbunden ist. Durch die kinetische Energie des Objekts wird die Zwischenschichtfolie gedehnt, beginnt sich von den Glasscheiben zu lösen und tritt teilweise zwischen den Glasfragmenten aus. Die Penetrationsfestigkeit der im Stand der Technik bekannten Verbundverglasungen ist im Hinblick auf die gestiegenen Sicherheitsbedürfnisse im Kfz- und Architekturbereich bzw. des vermehrten Einsatzes von großen Glasflächen verbesserungswürdig. Es war die Aufgabe der vorliegenden Erfindung, besonders penetrationsfeste Verbundsysteme zur Verfügung zu stellen.

### Beschreibung der Erfindung

Gegenstand der vorliegenden Erfindung sind daher Sicherheitaverbundsysteme, bestehend aus zwei transparenten Platten aus Glas und einer zwischen den Platten angeordneten Folie auf Basis von teilacetalisiertem Polyvinylalkohol, wobei die Folie 20 - 35 Gew.% Triethylenglycoloctanoat (3G8) und Haftungsregulatoren enthält und eine Kältebruchtemperatur nach ISO 8570 unterhalb - 35 °C aufweist, dadurch gekennzeichnet, dass mindestens eine Folie eine gemäß DIN EN ISO 8256 (2004) Variante A an einem mit vorgebrochenen transparenten Platten versehenen Prüfkörper aus dem Sicherheitsverbundsystem bestimmte dickenabhängige Energieaufnahme E [J/mm] von E d - b besitzt, wobei die Foliendicke d 0,01 bis 25 mm, die Breite des Prüfkörpers 14 mm und die Konstante b 0,275 bis -0,275 beträgt, mit der Maßgabe, dass für Foliendicken kleiner als 0,375 mm d = 0,375 ist.

Die Messung der Energieaufnahme der Folie erfolgt bevorzugt mit dem im folgenden beschriebenen erfindungsgemäßen Verfahren. Mit diesem Verfahren ist es möglich, die Gesamtenergieaufnahme einer Zwischenschichtfolie in einem Laminat, d.h. die Dehnung und Delamination der Folie unter plötzlich auftretenden mechanischen Belastungen zu bestimmen.

Penetrationsfeste Verbundsysteme im Sinne der vorliegenden Erfindung weisen daher nicht nur besonders reißfeste Zwischenschichtfolien, sondern auch eine ausgewogene Haftung dieser Folien am jeweiligen Deckmaterial d.h. eine bestimmte Delaminationsneigung auf. Die durch Delamination verbrauchte Energie ist ein Maß für die Haftung der Folie unter dynamischer Krafteinwirkung. Ist die Haftung zu gering, wird durch Delamination nur wenig Energie verbraucht; ist die Haftung zu hoch, wird die Folie eher reißen als delaminieren, so dass auch hier nur wenig Energie verbraucht wird. So wird bei zu hoher Haftung auch bei extrem reißfesten Folien eine rasche Penetration die Folge sein, da die Folie an den Bruchkanten des Glases bricht.

Die über die Schlagzugzähigkeit ermittelte maximale Energieaufnahme der Folie ist abhängig von der Breite und Dicke d [mm] der Folie. Erfindungsgemäße Folien weisen bei einer Breite des Prüfkörpers von 14 mm eine Energieaufnahme E in J/mm von E > d - b auf; diese ist damit nur auf die Rissbreite und nicht auf den Querschnitt der Folie bezogen.

Die Konstante b mit der formalen Einheit [mm] zur Bestimmung der Energieaufnahme der erfindungsgemäß einsetzbaren Folien beträgt bevorzugt 0,275; 0,250; 0,225; 0,200; 0,175; 0,150; 0,125; 0,100; 0,075; 0,050; 0,025; 0,000; -0,025; -0,050; - 0,075; -0,100; -0,125; -0,150; -0,175; -0,200-; -0,225; -0,250 oder 0,275 bzw. kann als Bereich zwischen zwei dieser Werte (z.B. - 0,175 bis 0,075) liegen.

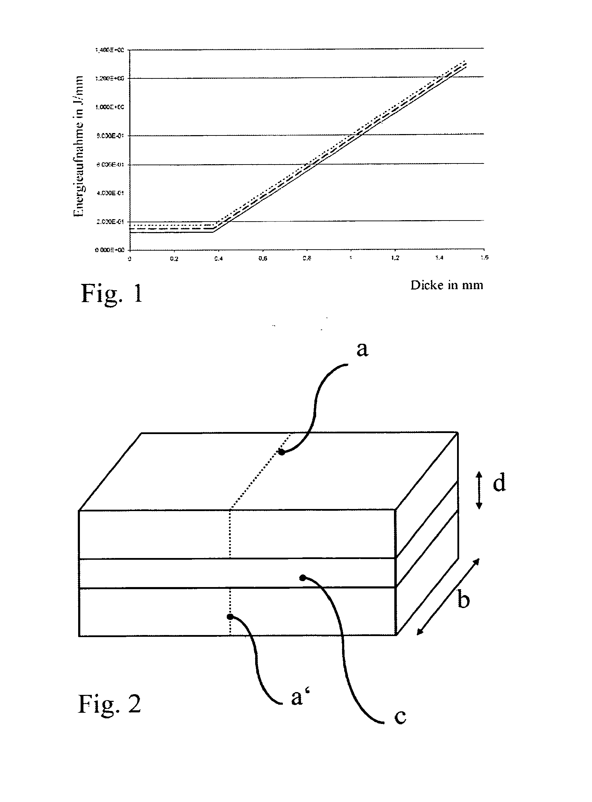

Fig. 1 zeigt bevorzugte minimale Energieaufnahmen von erfindungsgemäß einsetzbaren Folien in Abhängigkeit von deren Dicke. Die untere Gerade steht für Folien mit einer Konstanten b = 0,25; die mittlere Gerade für b = 0,225 und die obere Gerade für b = 0,20. Die Energieaufnahme von erfindungsgemäß einsetzbaren Folien liegt über den jeweiligen Geraden. Für Foliendicken kleiner als 0,375 mm wird d dickenunabhängig gleich 0,375 gesetzt, d.h. die Energieaufnahme von Folien mit dieser Dicke hängt nur noch von der Konstante b ab.

Die Folien weisen bevorzugt die für Verbundverglasungen üblichen Dicken von 0,38 mm; 0,76 mm; 1,14 mm; 1,52 mm oder ganzzahlige Vielfache von 0,38 mm auf. Die folgende Tabelle zeigt die bevorzugten Energieaufnahmen mindestens einer Folie der erfindungsgemäßen Sicherheitsverbundsysteme bei den genannten Dicken der Folien:

| Dicke der Folie [mm] | min. Energieaufnahme [J/mm] |
|---|---|
| 0,38 | 0,10 bevorzugt 0,12; 0,15 oder 0,20 |
| 0,76 | 0,50 bevorzugt 0,55; 0,60 oder 0,65 |
| 1,14 | 0,90 bevorzugt 1,00; 1,10 oder 1,20 |
| 1,52 | 1,30 bevorzugt 1,40; 1,60 oder 1,80 |

Als Obergrenze der Energieaufnahme dieser Folien kann der auf den Querschnitt (d.h. Breite und Dicke der Folie) bezogene Wert von 10 J/mm² angegeben werden.

Als transparente Platten werden solche aus Glas eingesetzt, sodass die vorliegende Erfindung ein Verbundsicherheitsglas mit einer besonders hohen Penetrationsfestigkeit betrifft.

Neben der Energieaufnahme der Folie können die erfindungsgemäßen Verbundsicherheitssysteme durch die Haftung der Folie an den transparenten Platten zusätzlich charakterisiert werden. So liegt die mit dem Kompressionsschertest nach DE 19 756 274 A1 bestimmte Haftung mindestens einer Folie an einer Glasoberfläche bevorzugt zwischen 8 und 30 N/mm².

Die erfindungsgemäßen Sicherheitsverbundsysteme, hier insbesondere Verbundsicherheitsglas, werden in üblicher, dem Fachmann bekannter Art und Weise durch Lamination der transparenten Platten mit mindestens einer Folie unter erhöhtem oder verringertem Druck und erhöhter Temperatur hergestellt. Hierzu geeignete Verfahren sind z.B. in EP 1 235 683 B1 oder EP 1 181 258 B1 offenbart.

Erfindungsgemäß eingesetzte Zwischenschichtfolien basieren auf teilacetalisiertem Polyvinylalkohol, hier insbesondere auf Polyvinylbutyral (PVB). PVB kann unvernetzt oder vernetzt, z.B. mit Dialdehyden oder Aldehyd-Carbonsäuren gemäß DE 10143109 A1 oder WO 02/40578 A1, eingesetzt werden. Zwischenschichtfolien auf Basis von teilacetalisiertem Polyvinylalkohol enthalten neben Lichtstabilisatoren und Haftungsregulatoren zwischen 20 und 35 % Weichmacher wie z.B. 3G8 oder Dihexyladipat. Systeme dieser Art sind z.B. in EP 0 185 863 A1, WO 03/097347 A1 und WO 01/43963 A1 beschrieben. Der Einsatz mindestens einer Folie, basierend auf vernetztem oder unvernetztem, weichmacherhaltigem Polyvinylbutyral ist bevorzugt.

Es ist möglich, mehrere Teilfolien miteinander zu kombinieren, die ausschließlich auf teilacetalisiertem Polyvinylalkohol basieren. Solche Folienlaminate sind z.B. aus EP 1 218 690 A1, JP 2004-99354 oder DE 10 200 400 0023 bekannt und werden durch Co-Extrusion oder Co-Lamination von entsprechenden Teilfolien hergestellt. Diese Teilfolien unterscheiden sich bzgl. ihres polymeren Materials, in der Molmasse oder in Art oder Menge des Weichmachers und im Fall von PVB zusätzlich im Acetalisierungsgrad oder Restalkoholgehalt.

Erfindungsgemäß eingesetzte Folien weisen bevorzugt mindestens zwei Teilfolien aus vernetztem oder unvernetztem Polyvinylbutyral mit unterschiedlichem Weichmachergehalt auf. Hier ist der Einsatz von drei Teilfolien, wobei eine harte Teilfolie mit geringem Weichmacheranteil von zwei weichen Teilfolien mit höherem Weichmacheranteil eingekapselt ist, bevorzugt.

Erfindungsgemäße Verbundsicherheitssysteme weisen 2 transparente Platten und entsprechend eine Zwischenschichtfolie, die optional wieder aus Teilfolien aufgebaut sein kann, auf. Zweckmäßigerweise besitzen alle eingesetzten Zwischenschichtfolien die genannten Energieaufnahmen; es ist allerdings auch möglich, neben Folien mit erfindungsgemäßer Energieaufnahme auch handelsübliche Folien, z.B. auf Basis von weichmacherhaltigem Polyvinylbutyral gemäß WO 03/051974 A1 oder EP 1 412 178 B1 einzusetzen.

Erfindungsgemäß eingesetzte Folien weisen eine Kältebruchtemperatur nach ISO 8570 von unterhalb - 35 °C auf. Solche Folien haben auch bei geringen Temperaturen, wie sie z.B. bei Flugzeugen während des Fluges häufig auftreten, eine geringe Neigung zum sprödbruch und daher verbesserte Sicherheitseigensohaften bei niedrigen Temperaturen.

Die Messung der Energieaufnahme der Folie kann mit dem erfindungsgemäßen Verfahren, d.h. in einem vorgebrochenem Glaslaminat erfolgen. Es ist jedoch auch möglich, die Schlagzugzähigkeit der Folien selbst, d.h. ohne Laminierung mit transparenten Platten, gemäß DIN EN ISO 8256 (Variante A) zu bestimmen. Für das erfindungsgemaße Verbundsystem besonders geeignete Folien weisen eine gemäß dieser Norm bestimmte Energieaufnahme von mehr als 2000 kJ/m² auf. Als Obergrenze der Energieaufnahme dieser Folien kann der auf den Querschhitt (d.h. Breite mal Dicke der Folie) bezogene Wert von 10000 kJ/m² angegeben werden.

Der Unterschied der an der Folie bestimmten Werten zu den mit dem erfindungsgemäßen Verfahren bestimmten Werten am Laminat resultiert aus der fehlenden Delaminationsarbeit und der größeren Dehnungsfläche der Folie, da im Laminatversuch die Dehnung der Folie nur im Delaminationsbereich erfolgt.

Als Verbundverglasungen mit zwei Glasscheiben und einer Zwischenschichtfolie können die erfindungsgemäßen Systeme handelsübliches Verbundsicherheitsglas, z.B. als Kfz-Windschutzscheibe ersetzen. Bei erhöhten Sicherheitsanforderungen können Verbundsysteme mit mehr als zwei Glasscheiben und mindestens zwei Zwischenschichtfolien verwendet werden. Als Panzergläser werden Verbunde mit 4 oder mehr Glasscheiben und entsprechend 3 und mehr Zwischenschichtfolien bezeichnet.

Erfindungsgemäße Verbundsicherheitssysteme finden bevorzugt als Verglasung oder Fassadenmaterial im Architekturbereich, Hurrikan-resistente Verglasung, Durchwerf-, Durchbruch resistente Verglasung, Verglasung im Flugzeug- oder Kfz-Bereich, Verglasung im Über-Kopf-Bereich oder als Treppenstufen Verwendung.

Ein weiterer Gegenstand der vorliegenden Erfindung ist ein Verfahren zur Messung der Schlagzugzähigkeit von Laminaten aus zwei transparenten Platten und einer zwischen den Platten angeordneten Folie. Die Energieaufnahme wird bestimmt, indem die transparenten Platten so vorgebrochen werden, dass die der Zwischenschicht zugewandten Kanten der Brüche keinen Versatz zueinander aufweisen. Es ist bei der Probenvorbereitung darauf zu achten, das die Zwischenschichtfolie beim Vorbrechen der transparenten Platten nicht gedehnt oder delaminiert wird.

Fig. 2 zeigt einen solchen Probenkörper, bei dem a und a' die vorgebrochenen transparenten Platten und c die Zwischenschichtfolie bezeichnen. Die Bezugszeichen b und d stehen für die Breite bzw. Dicke der Folie. Anschließend wird eine definierte Arbeit mittels einer Schlagzugmaschine aufgebracht (s. Fig. 3 und 4) und die Energieaufnahme gemäß DIN ISO 8256 bestimmt.

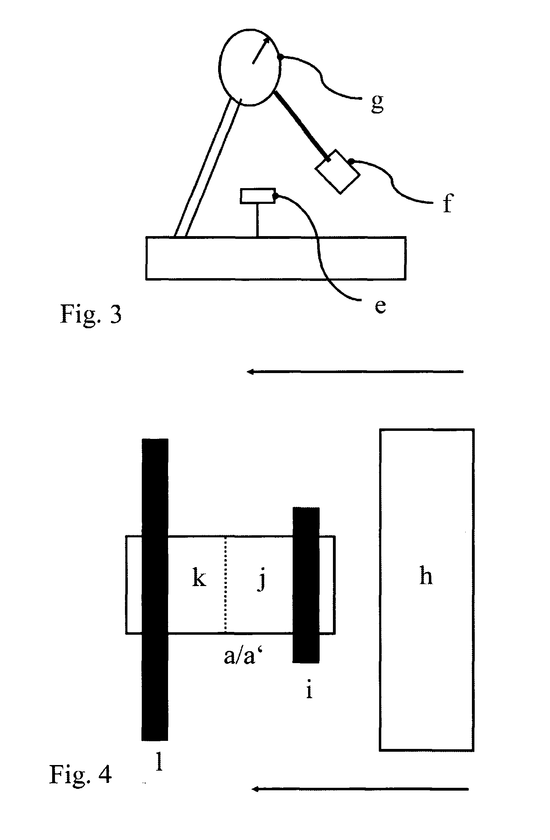

Die Erfindung betrifft somit eine Methode zur direkten Messung jener Energie, welche die Leistungsfähigkeit z.B. eines Verbundsicherheitsglases bei einem dynamischen Stoßereignis unmittelbar beschreibt. Die Methode bietet damit die Möglichkeit, Zwischenschichten bezüglich ihrer Leistungsfähigkeit bei dynamischen Stoßereignissen zu optimieren und im Hinblick auf spezifische Anforderungen auszuwählen. Ein Vorteil der Methode besteht darin, dass keinerlei Haftungsprüfungen am Laminat bzw. mechanische Messungen an der Zwischenschicht vorgenommen werden müssen, sondern an aus dem Verbundsicherheitsglas herausgeschnittenen Probekörpern in einem direkten Test die Energieaufnahme bei schlagartiger Belastung gemessen werden kann. Der Mechanismus der Energieaufnahme und -dissipation, welche die kinetische Energie eines aufprallenden Objektes, z.B. einer zu Prüfzwecken abgeworfenen Stahlkugel, soweit neutralisiert, dass das Objekt nicht das Verbundsicherheitsglas durchdringt, besteht im Wesentlichen darin, dass sich die Zwischenschicht unter der plötzlich einsetzenden Zugbeanspruchung vom Glas ablöst, wozu Energie aufgebracht werden muss. Zum Nachstellen der plötzlichen Zugbeanspruchung bedient sich die erfindungsgemäße Methode der in DIN EN ISO 8256 (2004) beschriebenen Apparatur (schematisch in Fig. 3 und 4 dargestellt) zur Durchführung des Schlagzugversuches. Der Test wird abweichend von der bekannten Kunststoffprüfung an Laminatstreifen durchgeführt, bei denen die beiden Glasschichten mittig und ohne Versatz angebrochen sind.

In Fig. 3 ist die im erfindungsgemäßen Verfahren verwendete Apparatur skizziert, wobei e) für die gehalterte Probe, f) für das an einem Pendel befestigte Schlagwerkzeug und g) für die Pendelhalterung bzw. die Messeinrichtung steht. Das Schlagwerkzeug f) wird auf die maximale Auslenkung des Pendels eingestellt, losgelassen und trifft dann im unteren Scheitelpunkt des Pendels auf die Probe. Mit dieser definierten kinetischen Energie wird die Probe zerschlagen und die hierzu nötige Arbeit gemäß DIN ISO 8256 bestimmt. Fig. 4 zeigt das jochförmig ausgeführte Schlagwerkzeug h, das auf den Probenträger 1 in Pfeilrichtung auftrifft und die Probe an der Bruchstelle a/a in die Teilstücke k und j zerschlägt. Teilstück j ist fest mit der Halterung i verbunden und verbleibt in der Apparatur; Teilstück k und Träger 1 werden in Pfeilrichtung weggeschlagen. Anhand der am Laminatstreifen zu ermittelnden Breite der Folie wird die geleistete Arbeit in Energieaufnahme pro Breite umgerechnet. Zur Berechnung und genauen Arbeitsweise wird auf die DIN ISO 8256 (2004) verwiesen.

### Vorbereitung zur Messung der Schlagzugzähigkeit

Die Laminatstäbe werden in einer Breite von 14,0 ± 1,0 mm und einer Länge von 80,0 ± 1,0 mm aus einem VSG geschnitten, welches aus zwei Floatglasscheiben der Stärke 2,0 ± 0,1 mm und der Zwischenschicht besteht. Um eine Verfälschung der Ergebnisse zu vermeiden, ist darauf zu achten, dass sich die Zwischenschicht berührenden Bruchkanten der gegenüberliegenden Glasschichten mit einer Toleranz von ± 0,5 mm in der einer gemeinsamen senkrecht zur Hauptachse des Laminatstabes orientierten Ebene befinden, also keinen gegenseitigen Versatz aufweisen (s. Fig. 2; a/a'). Das Laminat wurde zuvor auf eine dem Fachmann bekannte Weise hergestellt.

Um zu einem aussagekräftigen Wert für die Energieaufnahme eines Materials zu gelangen, werden aus einer VSG-Scheibe 15 Probekörper zugeschnitten, deren Schlagzugzähigkeit ermittelt und aus den Einzelwerten der Mittelwert berechnet. Anders als bei der Kunststoffprüfung homogener Materialien von der DIN EN ISO 8256 beschrieben, wird die Schlagzugzähigkeit der Laminatprobekörper nicht auf deren Querschnitt bezogen und in kJ/m2 ausgedrückt, sondern auf die am individuellen Probekörpers ermittelte Folienbreite in mm innerhalb des gesetzten Rahmens von 14,0 ± 1,0 mm. Die Energieaufnahme wird dementsprechend in der Einheit J/mm ausgedrückt. Im übrigen wird soweit möglich und physikalisch sinnvoll gemäß der genannten Prüfnorm DIN EN ISO 8256 in der ab 2004 geltenden Fassung vorgegangen. Bzgl. der Prüfmaschine wird auf die ISO 13802 verwiesen.

Natürlich greift die Methode unabhängig davon, ob das Zwischenschichtmaterial aus einer einzelnen homogenen Lage besteht oder sich komplex zusammensetzt, z. B. aus einer Abfolge von zwei oder mehr unterschiedlichen Lagen bzw. Funktionsschichten.

Ein VSG mit einer wie beschrieben gemessenen Energieaufnahme von 0,40 J/mm kann mit handelsüblichen, haftungsreduzierten PVB-Folien der Stärke von 0,76 mm erreicht werden. Die Pummelhaftung einer solchen Folie zum Floatglas muss sich dafür in einem Bereich von 2 bis 4 bewegen. Da Folien zur Herstellung von VSG in aller Regel eine strukturierte Oberfläche aufweisen, ist die Stärke der Zwischenschicht zuverlässig aus einer Bestimmung des Flächengewichtes in Kombination mit der physikalischen Dichte ermittelbar.

### Kompressionsschertest nach DE 197 56 274 A1

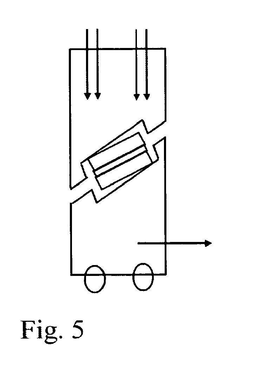

Zur Beurteilung der Haftung einer PVB-Folie am Mineralglas wird ein sogenannter Kompressionsschertest gemäß nachfolgender Beschreibung durchgeführt. Zur Herstellung der Prüfkörper wird die zu prüfende PVB-Klebefolie zwischen zwei ebene Silikatglasscheiben des Formats 300 mm x 300 mm mit einer Dicke von 4 mm gebracht, in einem Vorverbundofen mit Kalanderwalzen zu einem Glas-Vorverbund entlüftet und anschließend in einem Autoklav bei einem Druck von 12 bar und bei einer Temperatur von 140 °C innerhalb von 30 min. zu einem ebenen Verbundsicherheitsglas verpresst. Aus dem so hergestellten Verbundsicherheitsglas werden 10 Proben mit den Maßen 25,4 mm x 25,4 mm geschnitten. Diese werden unter einem Winkel von 45° in eine zweiteilige, in Fig. 5 symbolisch dargestellte Prüfapparatur eingespannt. Die obere Hälfte wird mit einer stetig steigenden, genau vertikal nach unten gerichteten Kraft beaufschlagt, bis es zu einer Abscherung innerhalb des Prüfkörpers, d.h. der zu prüfenden Verbundsicherheitsglasscheiben, kommt.

Die Prüfparameter sind wie folgt:

| | |
|---|---|
| Prüfkörper: | quadratisch 25,4 mm x 25,4 mm |
| Verlegung: | untere Scheibe jeweils mit der Luft-bzw. Feuerseite zur Folie (Luft/Luft), oder obere und untere Scheibe jeweils mit der Zinnseite zur Folie (Bad/Bad) |
| Lagerung vor dem Versuch: | 4h bei Normklima 23°C/50% RLF |
| Vorschub: | 2, 5 mm/min |
| Probenanzahl: | 10 |
| Auswertung: | Maximalkraft, die zur Abscherung der Folie vom Glas benötigt wird. Die Kraft wird auf die Probenfläche bezogen (in N/mm² oder psi) |

Für jedes Beispiel wird die bei der Abscherung ausgeübte Kraft von zehn gleichen Prüfkörpern linear gemittelt. Soweit in den nachfolgenden Beispielen und den Ansprüchen auf den mittleren Kompressionsschertest-Wert Bezug genommen wird, ist damit dieser Mittelwert aus 10 Messungen gemeint.

### Beispiele

### Vergleichsbeispiel 1

Mit dem Produkt TROSIFOL® MB 0,76 (HT TROPLAST AG) und 2 Stück Floatglas der Stärke 2 mm (Optifloat® der Firma Pilkington) wird ein Verbundsicherheitsglas der Abmessung 30 x 30 cm hergestellt. Aus der gleichen Folie und Optifloat® der Stärke 4 mm werden 6 Prüfscheiben der Abmessung 90 x 110 cm laminiert.

Aus dem VSG mit Aufbau 2 mm Glas/0,76 mm Folie/2 mm Glas werden 15 Laminatstäbe der Abmessung 80 x 14 mm geschnitten, wozu zunächst das Glas mit einem Diamantglasschneider angeritzt wird, entlang der eingeritzten Sollbruchstellen durch minimales Abknicken vorgebrochen und die Folie mit einer Rasierklinge durchtrennt wird. Hierbei ist darauf zu achten, dass die Zwischenschicht sowenig dehnbeansprucht wird, als gerade für den Zugang der Rasierklinge nötig. Die Laminatstäbe werden von beiden Seiten mithilfe des Diamantglasschneiders mittig angeritzt und durch minimales Knicken vorgebrochen. Falls hierbei die Bruchkante der bis zur Zwischenschicht durchgehenden Risse um mehr als 0,5 mm gegeneinander versetzt sind, ist dieser Laminatstab zu ersetzen. Die Laminatstäbe werden zum Schutz gegen Auffeuchten in Beuteln aus Aluminiumbeschichteten PE eingeschweißt. Vor Prüfung auf der Schlagzugapparatur werden die Probekörper an beiden Enden mit einer Lage eines handelsüblichen Klebebandes umklebt (z.B. tesa-Film, Typ 5740), um zu verhindern, dass der Probekörper bei Prüfung zwischen den Klemmbacken herausrutscht. Das VSG enthaltend das Zwischenschichtmaterial TROSIFOL MB mit einer Dicke von 0,76 mm erreicht bei Prüfung auf der Schlagzugapparatur einen Mittelwert der Energieaufnahme von 0,067 J/mm. Bei Prüfung gemäß EN 356 besteht das VSG - 4 mm Glas/0,76 mm Folie/4 mm - zwar die Klasse P1, jedoch versagt es bei Klasse P2.

### Vergleichsbeispiel 2

Mit dem Produkt Butacite® B5 in Stärke 0,76 mm (Du Pont) und 2 Stück Floatglas der Stärke 2 mm (Optifloat® der Firma Pilkington) wird ein Verbundsicherheitsglas der Abmessung 30 x 30 cm hergestellt. Aus der gleichen Folie und Optifloat® der Stärke 4 mm werden 6 Prüfscheiben der Abmessung 90 x 110 cm laminiert. Aus dem VSG mit Aufbau 2 mm Glas/0,76 mm Folie/2 mm Glas werden die 15 Laminatstäbe der Abmessung 80 x 14 mm geschnitten. Das VSG enthaltend das Zwischenschichtmaterial Butacite® B5 in Stärke 0,76 mm erreicht bei Prüfung auf der Schlagzugapparatur einen Mittelwert der Energieaufnahme von 0,114 J/mm. Bei Prüfung gemäß EN 356 besteht das VSG - 4 mm Glas/0,76 mm Folie/4 mm - zwar die Klasse P1, jedoch versagen bei der Abwurfhöhe 3 m (Klasse P2) 2 von 3 Scheiben.

### Vergleichsbeispiel 3

Mit dem Produkt Saflex® RB 41 in Stärke 0,76 mm (Solutia) und 2 Stück Floatglas der Stärke 2 mm (Optifloat® der Firma Pilkington) wird ein Verbundsicherheitsglas der Abmessung 30 x 30 cm hergestellt. Aus der gleichen Folie und Optifloat® der Stärke 4 mm werden 6 Prüfscheiben der Abmessung 90 x 110 cm laminiert. Aus dem VSG mit Aufbau 2 mm Glas/0,76 mm Folie/2 mm Glas werden die 15 Laminatstäbe der Abmessung 80 x 14 mm geschnitten. Das VSG enthaltend das Zwischenschichtmaterial Saflex® RB 41 in Stärke 0,76 mm erreicht bei Prüfung auf der Schlagzugapparatur einen Mittelwert der Energieaufnahme von 0,210 J/mm. Bei Prüfung gemäß EN 356 besteht das VSG - 4 mm Glas/0,76 mm Folie/4 mm - die Klasse P1 sowie P2, wobei jedoch bei einer der drei auf P2 geprüften Scheiben die dritte Kugel fast durchfällt, da ein Folienanriss aufgetreten ist.

### Vergleichsbeispiel 4

Mit dem Produkt TROSIFOL® MV 0,76 (HT TROPLAST AG) und 2 Stück Floatglas der Stärke 2 mm (Optifloat® der Firma Pilkington) wird ein Verbundsicherheitsglas der Abmessung 30 x 30 cm hergestellt. Aus der gleichen Folie und Optifloat® der Stärke 4 mm werden 6 Prüfscheiben der Abmessung 90 x 110 cm laminiert. Aus dem VSG mit Aufbau 2 mm Glas/0,76 mm Folie/2 mm Glas werden die 15 Laminatstäbe der Abmessung 80 x 14 mm geschnitten. Das VSG enthaltend das Zwischenschichtmaterial TROSIFOL® MV 0,76 erreicht bei Prüfung auf der Schlagzugapparatur einen Mittelwert der Energieaufnahme von 0,380 J/mm. Bei Prüfung gemäß EN 356 besteht das VSG - 4 mm Glas/0,76 mm Folie/4 mm sicher die Klassen P1 sowie P2.

### Erfindungsgemäße Beispiele 1 - 4

Flachfolien mit in Tabelle 1 angegebenen Zusammensetzungen wurden auf einer mit Breitschlitzdüse versehenen Extrusionsanlage in einer Stärke von 0,76 mm hergestellt, wobei die Massetemperatur im Extruder nicht höher als 210 °C lag. Mit diesen Folien und 2 Stück Floatglas der Stärke 2 mm (Optifloat® der Firma Pilkington) wurden Verbundsicherheitsgläser der Abmessung 30 x 30 cm hergestellt. Aus den gleichen Folien und Optifloat® der Stärke 4 mm wurden jeweils 6 Prüfscheiben der Abmessung 90 x 110 cm laminiert. Aus dem VSG mit Aufbau - 2 mm Glas/0,76 mm Folie/2 mm Glas wurden jeweils die 15 Laminatstäbe der Abmessung 80 x 14 mm geschnitten. Das VSG enthaltend die Zwischenschichtmaterialen in Stärke 0,76 mm erreichte bei Prüfung auf der Schlagzugapparatur die in Tabelle 1 angegebenen Mittelwerte der Energieaufnahme. Bei Prüfung gemäß EN 356 bestanden die VSG - 4 mm Glas/0,76 mm Folie/4 mm bei der um 0,5 m erhöhten Abwurfhöhe 3,5 m (Klasse P2 + 0,5 m) jeweils 3 von 3 Scheiben.

**Tabelle 1**

| | Beispiel 1 | Beispiel 2 | Beispiel 3 | Beispiel 4 |
|---|---|---|---|---|
| PVB | 73 | 73 | 73 | 73 |
| PVOH-Gehalt | 20,0 | 20,0 | 20,0 | 20,0 |
| 3G8 | 22,5 | 19,5 | 19,5 | 19,5 |
| DBEEA | 4,5 | 7,5 | - | - |
| DBEA | - | - | 7,5 | - |
| DBES | - | - | - | 7,5 |
| Tinuvin 328 | 0,15 | 0,15 | 0,15 | 0,15 |
| KAc | 0,005 | 0,005 | 0,005 | 0,005 |
| MgAc₂* 4H₂O | 0,0052 | 0,0052 | 0,0052 | 0,0052 |
| Energieaufnahme | 0,51 J/mm | 0,49 J/mm | 0,51 J/mm | 0,55 J/mm |
| Kältebruchtemperatur | - 44 °C | - 41 °C | - 41 °C | - 43 °C |
| Schlagzugzähigkeit | 1940 kJ/m² | 1933 kJ/m² | 2100 kJ/m² | 2185 kJ/m² |

Alle Mengenangaben in Gew.Prozent, PVOH = Polyvinylalkoholgehalt des PVB-Harzes in Gew.Prozent. Mengenangaben der Additive beziehen sich auf 100 Gew.Prozent der Grundmischung. 3G8 = Triethylenglykol-bis-2-ethylhexanoat. DBEEA = Di(butoxyethyl)adipat. Ac= Acetatrest

## Patentansprüche

1. Sicherheitaverbundsysteme, bestehend aus zwei transparenten Platten aus Glas und einer zwischen den Platten angeordneten Folie auf Basis von teilacetalisiertem Polyvinylalkohol, wobei die Folie 20 - 35 Gew.% Triethylenglykol-bis-2-ethylhexanoat und Haftungsregulatoren enthält und eine Kältebruchtemperatur nach ISO 8570 unterhalb - 35 °C aufweist, **dadurch gekennzeichnet, dass** mindestens eine Folie eine gemäß DIN EN ISO 8256 (2004, Variante A) an einem mit vorgebrochenen transparenten Platten versehenen Prüfkörper aus dem Sicherheitsverbundsystem bestimmte dickenabhängige Energieaufnahme E [J/mm] von B > d - b besitzt, wobei die Foliendicke d 0,01 bis 25 mm, die Breite des Prüfkörpers 14 mm und die Konstante b 0,275 bis -0,275 beträgt, mit der Maßgabe, dass für Foliendicken kleiner als 0,375 mm d = 0,375 ist.

2. Sicherheitsverbundsysteme nach Anspruch 1, **dadurch gekennzeichnet, dass** Folie auf vernetztem die oder unvernetztem weichmacherhaltigem Polyvinylbutyral basiert.

3. Sicherheiteverbundeysteme nach Anspruch 1 bis 2, **dadurch gekennzeichnet, dass** die Folie aus mindestens zwei Teilfolien aus vernetztem oder unvernetztem Polyvinylbutyral mit unterschiedlichem Weichmachergehalt besteht.

4. Sicherheitsverbundsysteme nach einem der Ansprüche 1 bis 3, **dadurch gekennzeichnet, dass** die Folie eine Schlagzugzähigkeit nach DIN EN ISO 8256 von größer 2000kJ/m² aufweist.

5. Sicherheitsverbundsysteme nach einem der Ansprüche 1 bis 4 **dadurch gekennzeichnet, dass** die Folie eine Haftung an einer Glasoberfläche gemäß Kompressionsschertest nach DE 19 756 274 A1 zwischen 8 und 30 N/mm² aufweist.

6. Sicherheitsverbundsysteme nach einem der Ansprüche 1 bis 5 **dadurch gekennzeichnet, dass** die Folie bei einer Dicke d von 0,76 mm eine Energieaufnahme E von mindestens 0.5 J/mm aufweist.

7. Verwendung der Sicherheitsverbundsysteme nach Anspruch 1 bis 6 als Verglasung oder Fassadenmaterial im Architekturbereich, Hurrikan-resistente Verglasung, Durchwerf-, Durchbruch resistente Verglasung, Verglasung im Flugzeug- oder Kfz-Bereich, Verglasung im Über-Kopf-Bereich oder als Treppenstufen.

8. Verfahren zur Messung der Schlagzugzähigkeit von Laminaten aus zwei transparenten Platten und einer zwischen den Platten angeordneten Folie durch Brechen der transparenten Platten, so dass die der Zwischenschicht zugewandten Kanten der Brüche keinen Versatz zueinander aufweisen und Aufbringen einer definierten Arbeit mittels einer Schlagzugmaschine gemäß DIN ISO 8256 (2004,Variante A).

## Claims

1. A safety composite systems consisting of two transparent panels made of glass and a film based on partially acetalised polyvinyl alcohol arranged between the panels, the film containing 20 to 35 % by weight of triethylene glycol bis(2-ethylhexanoate) and adhesion regulators and having a cold crack temperature in accordance with ISO 8570 below -35 °C, **characterised in that** at least one film has a thickness-dependent energy absorption E [J/mm] of E > d - b, determined on a test specimen formed from the safety composite system and provided with previously broken transparent panels in accordance with DIN EN ISO 8256 (2004, variant A), the film thickness d being 0.01 to 25 mm, the width of the test specimen being 14 mm, and the constant b being 0.275 to -0.275, with the proviso that d = 0.375 for film thicknesses of less 0.375 mm.

2. The safety composite systems according to Claim 1, **characterised in that** the film is based on crosslinked or non-crosslinked plasticiser-containing polyvinyl butyral.

3. The safety composite systems according to Claim 1 or 2, **characterised in that** the film consists of at least two sub-films formed from crosslinked or non-crosslinked polyvinyl butyral with different plasticiser contents.

4. The safety composite systems according to one of Claims 1 to 3, **characterised in that** the film has a tensile impact strength in accordance with DIN EN ISO 8256 of greater than 2000 kJ/m².

5. The safety composite systems according to one of Claims 1 to 4, **characterised in that** the film has an adhesion to a glass surface in accordance with the compression shear test according to DIN 19 756 274 A1 of between 8 and 30 N/mm².

6. The safety composite systems according to one of Claims 1 to 5, **characterised in that**, with a thickness d of 0.76 mm, the film has an energy absorption E of at least 0.5 J/mm.

7. Use of the safety composite systems according to Claims 1 to 6 as a glazing or façade material in the architectural field, hurricane-resistant glazing, shatter-proof or break-proof glazing, glazing in the aircraft or motor vehicle field, glazing in the overhead region, or as steps of a flight of stairs.

8. A method for measuring the tensile impact strength of laminates formed from two transparent panels and of a film arranged between the panels by breaking the transparent panels such that the edges of the fractures facing the intermediate layer do not exhibit any displacement relative to one another and by applying a defined energy by means of a tensile impact machine in accordance with DIN ISO 8256 (2004, variant A).

## Revendications

1. Systèmes de sécurité composites, constitués de deux plaques transparentes en verre et d'un film sur base d'alcool polyvinylique partiellement acétalisé disposé entre les plaques, le film contenant de 20 à 35 % en poids de triéthylèneglycol-bis-2-éthyle-héxanoate et des régulateurs d'adhérence et présentant une température de rupture à froid selon la norme ISO 8570 inférieure à -35°C, **caractérisés en ce qu'**au moins un film fait preuve d'une absorption d'énergie dépendant de l'épaisseur E (J/mm) de E > d - b, définie selon la norme DIN EN ISO 8256 (2004, variante A) sur une éprouvette munie de plaques transparentes prébrisées, l'épaisseur de film d étant de 0,01 à 25 mm, la largeur de l'éprouvette étant de 14 mm et la constante b étant de 0,275 à 0,275 avec le critère que pour des épaisseurs de film inférieures à 0,375 mm, d = 0,375.

2. Systèmes de sécurité composites selon la revendication 1, **caractérisé en ce que** le film est basé sur du butyral de polyvinyle réticulé ou non réticulé, contenant un plastifiant.

3. Systèmes de sécurité composites selon la revendication 1 à 2, **caractérisé en ce que** le film est constitué d'au moins deux films partiels en butyral de polyvinyle réticulé ou non réticulé avec une teneur différente en plastifiant.

4. Systèmes de sécurité composites selon l'une quelconque des revendications 1 à 3, **caractérisé en ce que** le film fait preuve d'un indice de résilience selon la norme DIN ISO 8256 supérieur à 2000kJ/m².

5. Systèmes de sécurité composites selon l'une quelconque des revendications 1 à 4, **caractérisé en ce que** le film fait preuve d'une adhérence sur une surface en verre selon le test de cisaillement sous compression selon le document DE 19 756 271 A1 compris entre 8 et 30 N/mm².

6. Systèmes de sécurité composites selon l'une quelconque des revendications 1 à 5, **caractérisé en ce qu'**à une épaisseur d de 0,76 mm, le film fait preuve d'une absorption d'énergie E d'au moins 0.5 J/mm.

7. Utilisation des systèmes de sécurité composites selon la revendication 1 à la revendication 7 en tant que vitrage pour matériau de façade dans le domaine de l'architecture, en tant que vitrage résistant aux ouragans, en tant que vitrage résistant au bris par projection, en tant que vitrage résistant à la rupture, en tant que vitrage dans le domaine aéronautique ou automobile, en tant que vitrage dans le domaine des verrières ou en tant que marches d'escalier.

8. Procédé pour mesurer l'indice de résilience de laminés composés de deux plaques transparentes et d'un film disposé entre les plaques par rupture des plaques transparentes, de sorte que les arêtes de rupture faisant face à la couche intermédiaire ne présentent aucun déport mutuel et par application d'un travail défini au moyen d'une machine de choc-traction selon la norme DIN ISO 8256 (2004, variante A).
